# EUROPÄISCHE PATENTSCHRIFT

(11) **EP 1 745 325 B1**
(45) Veröffentlichungstag und Bekanntmachung des Hinweises auf die Patenterteilung: **16.06.2010**
(21) Anmeldenummer: 05753628.6
(22) Anmeldetag: 13.05.2005
(51) Int. Cl.: G02C 5/22, G02C 5/16

(54) **BRILLE**
GLASSES
PAIRE DE LUNETTES

(30) Priorität: 13.05.2004 DE 102004023839
(43) Veröffentlichungstag der Anmeldung: 24.01.2007
(60) Teilanmeldung: 10002044.5
(73) Patentinhaber: ic! berlin brillenproduktions GmbH, 10405 Berlin (DE)
(72) Erfinder: HABERMANN, Gert, 80639 München (DE)
(74) Vertreter: Hruschka, Jürgen
(86) Internationale Anmeldenummer: PCT/DE2005/000881
(87) Internationale Veröffentlichungsnummer: WO 2005/111700

(56) Entgegenhaltungen:
- EP-A- 0 863 424
- WO-A-00/67067
- WO-A-98/48314
- DE-U1- 8 902 196
- FR-A- 954 467
- FR-A- 2 779 241
- GB-A- 2 034 072
- US-A- 5 532 766

## Beschreibung

Die vorliegende Erfindung betrifft eine Brille bzw. ein Brillengestell sowie eine Brillenfassung und Brillenbügel für ein solches Brillengestell.

Aus dem Stand der Technik sind verschiedene Varianten von Gelenkmechanismen bei Brillengestellen bekannt. Die gängigste Variante basiert auf einem Scharniermechanismus, bei dem am Rahmen bzw. der Fassung der Brillengläser Stifte angeordnet sind, die mit einem entsprechenden Gelenkteil, welches am fassungsseitigen Ende des Bügels angeordnet ist, kooperieren, indem beide Teile ineinander geschoben werden und mittels Spezialschrauben drehbar verbunden werden. Bei den meisten Brillenfassungen, insbesondere bei denjenigen, welche mit Korrekturgläsern verwendet werden sollen, erfolgt das Öffnen und Schließen der Fassungen zum Einsetzen oder Wechseln der Brillengläser mittels eines sogenannten Schließblocks. Denkbar ist es auch, dass die Gläser unmittelbar an einem Rahmen befestigt werden, indem Schrauben direkt in das Glas geschraubt werden. Bei rahmenlosen Brillen werden die Bügel direkt über ein Ansatzstück mit den Gläsern verschraubt.

Da das Drehgelenk während der Lebensdauer der Brille dynamisch sehr stark beansprucht wird, haben mehrere Lösungen der Einfachheit wegen auf ein herkömmliches Drehgelenk verzichtet.

So schlägt die US-Patentschrift Nr. 3,155,982 eine Brille vor, bei welcher die Brillenbügel direkt mit dem vorderen, die Gläser beinhaltenden Fassungsteil zusammenwirken. Hierzu teilt sich das Ende des fassungsseitigen Endes des Bügels in drei Blattfedern auf, wobei die mittlere Blattfeder an der Außenkante des Fassungsteils anliegt, während die beiden äußeren Blattfedern mit an ihren Enden geformten Haken in Öffnungen eingreifen, die in der Nähe der Außenkante in dem Hauptteil angeordnet sind. Ein Nachteil der in der US 3, 155, 982 beschriebenen Gelenkkonstruktion besteht darin, dass die Brillenbügel nur sehr locker mit der Fassung verbunden sind, so dass es leicht passieren kann, dass sich die Brillenbügel von der Fassung lösen, z.B. wenn die Brille auf den Boden fällt.

Eine weitere Brillengelenklösung, die ebenfalls mit einem mit drei Blattfedern versehenen Brillenbügel arbeitet, wird in der europäischen Patentschrift Nr. 0 863 424 B1 von Haffmans und Gottschling vorgeschlagen. An der Fassung ist links und rechts jeweils ein Anschlusselement vorgesehen, welches eine obere und eine untere Aussparung aufweist, die eine senkrecht zur Richtung des ausgeklappten Bügels verlaufende Gelenkachse bilden. Im ausgeklappten Zustand der Bügel durchgreifen die beiden äußeren Blattfedern der Bügel von der dem Gesicht des Brillenträgers zugewandten Fläche des Anschlusselements aus mit an ihren freien Enden vorgesehenen Biegungen die Aussparungen in dem Anschlusselement und kommen dann an der dem Gesicht des Brillenträgers abgewandten Fläche des Anschlusselements zum Anliegen, während die mittlere Blattfeder in ihrer ganzen Länge an der gegenüberliegenden Fläche des Anschlusselements anliegt. Das Anschlusselement ist dabei zweigeteilt, so dass ein leichtes Auswechseln der Gläser ermöglicht wird. Zur Stabilisierung kann eine Schließspange verwendet werden, die auf das geteilte Anschlusselement aufschiebbar ist. Dieser Mechanismus ist jedoch mit dem Nachteil behaftet, dass sich das Einsetzen der Bügel schwierig gestaltet, da die äußeren Blattfedern und die mittlere Blattfeder an einander gegenüberliegenden Flächen des Anschlusselements vorbei geführt werden müssen, wobei entgegen der Federwirkung gearbeitet werden muss und sich die Biegungen der Enden dabei als hinderlich erweisen. Darüber hinaus besteht insbesondere bei kleiner Dimensionierung dieses Gelenkes die Gefahr, dass sich der Bügel bereits bei geringer mechanischer Beanspruchung vom Anschlusselement löst.

Aus der WO 98/48314 ist ein Brillengestell mit links und rechts je einem Bügel und mit einer Fassung bekannt, die links und rechts je ein Anschlusselement aufweist, dessen bügelseitiges Ende in Richtung des Bügels im ausgeklappten Zustand weist. An dem Anschlusselement sind dabei Gelenkelemente angeordnet und der Bügel weist an seinem fassungsseitigen Ende drei stabförmige Finger aus Metalldraht auf, von denen die beiden äußeren an ihrem Ende jeweils ein Gelenkelement aufweisen, welches mit einem Gelenkelement des Anschlusselements unter Ausbildung eines Drehgelenks mit stationärer Drehachse zusammenwirkt, wobei der mittlere Finger so ausgebildet ist, dass er sich an dem Anschlusselement abstützt. Das beschriebene Brillengestell ist jedoch aufgrund der aufwendigen Konstruktion kostenintensiv in der Herstellung.

Ausgehend davon ist es die Aufgabe der vorliegenden Erfindung, ein einfaches und dadurch kostengünstiges Brillengestell zu schaffen, welches eine einfache Montage der Bügel und Gläser ermöglicht und bei dem ein selbsttätiges Lösen der Brillenbügel bei mechanischer Beanspruchung der Brille, insbesondere bei flachen Metallbrillen, erschwert wird.

Diese Aufgabe wird durch ein Brillengestell mit den Merkmalen des Anspruchs 1 gelöst.

Vorteilhafte Ausführungsformen der Erfindung ergeben sich aus den Unteransprüchen.

Demzufolge besteht der Kern der Erfindung darin, dass die Bügel des Brillengestells an ihrem fassungsseitigen Ende in ihrer Längsrichtung zumindest zwei Finger aufweisen, die derart ausgebildet sind, dass sie im Wesentlichen in Richtung der Gelenkachse eines durch Gelenkelemente des Anschlusselements der Fassung und durch kooperierende Gelenkelemente des Brillenbügels gebildeten Drehgelenks eine Federwirkung ausüben, welche die Gelenkelemente des Bügels und des Anschlusselements in einer drehbaren und verliersicheren Verbindung halten, und dass diese Finger gleichzeitig als Blattfedern ausgebildet sind, deren Blattfläche im ausgeklappten Zustand des Bügels im Wesentlichen in der Ebene des zu dem Bügel gehörenden Anschlusselements verläuft, welches ebenfalls annährend blattförmig geformt ist.

In einer Ausgestaltung des Brillengestells sind die Finger derart konfiguriert, dass die von zumindest einem Finger ausgeübte Federkraft auf den anderen Finger zu wirkt.

Eine solche Konstruktion kommt bei einem Brillengestell zum Einsatz, bei welchem das Anschlusselement durchgehend längs in eine obere Strebe und in eine untere Strebe aufgeteilt ist. Die Teilung des Anschlusselements erstreckt sich durch die Fassung hin bis zu den Brillengläsern. Dadurch wird ein leichtes Auswechseln der Brillengläser ermöglicht, da bei abgenommenen Bügeln die Seiten der Fassung auf einfache Weise auseinander gebogen werden können und so die Gläser zugänglich sind.

Bei montierten Bügeln bewirkt die Federkraft der Finger schließlich, dass die Streben gegeneinander verspannt und die Brillengläser in den entsprechenden Abschnitten der Fassung verliersicher fixiert werden.

In dieser Ausgestaltung weisen die Bügel an den Fingern Gelenkelemente in Form von Ösen auf, während an den Anschlusselementen entsprechende Drehzapfen vorgesehen sind. Die Ösen erstrecken sich dabei im Wesentlichen quer zu der Ebene bzw. Fläche des Bügels. Bei montiertem Bügel greifen folglich die Drehzapfen des Anschlusselements in die Ösen der Finger, wobei die Federwirkung der Finger die Ösen stets drehbar auf den Drehzapfen hält.

In einer anderen Ausführungsform sind die Drehzapfen des Anschlusselements dergestalt, dass sie drehbar in entsprechenden, einander gegenüberliegenden, konkaven Lagerschalen der Finger aufgenommen werden, wobei auch in diesem Fall die Federwirkung der Finger sicherstellt, dass die Lagerschalen stets in einem drehbaren Kontakt über den Drehzapfen des Anschlusselements gehalten werden.

Auf einfache Weise können die Finger entgegen ihrer Federwirkung auseinander gezogen werden, um die Bügel von dem Anschlusselement zu lösen und die Fassung für ein Auswechseln der Brillengläser zugänglich zu machen.

Zusätzlich zu den als Blattfedern ausgebildeten Fingern ist in einer weiteren Ausführungsform zwischen diesen noch eine dritte, mittlere Blattfeder vorgesehen, wobei alle Blattfedern zueinander parallel verlaufen.

Der Bügel lässt sich auf einfache Art und Weise zusammen mit den Blattfedern und den Ösen in einem Arbeitsschritt aus einem flachen Rohling ausstanzen. Anschließend können die Ösen umgebogen werden, so dass sich diese im Wesentlichen quer zu der Ebene des Bügels erstrecken.

Während die äußeren der drei Blattfedern die Gelenkelemente aufweisen, je nach Ausführungsform, die Ösen oder die Drehzapfen, dient die mittlere Blattfeder der Ausbildung eines Rückfedermechanismus, der ein Aus- bzw. Einklappen des Bügels unterstützt.

Hierzu stützt sich die mittlere Blattfeder an einem Abschnitt des Anschlusselements ab, welcher sich in Richtung zu dem Bügel erstreckt und so ein Widerlager ausbildet.

Gemäß der Erfindung ist es dabei vorgesehen, dass die Länge der Blattfedern und die Länge des Widerlagers so gewählt sind, dass die Federwirkung einerseits zur Erreichung einer verliersicheren Verbindung der Gelenkelemente des Bügels und des Anschlusselements ausreicht und andererseits die Blattfederwirkung der mittleren Blattfeder des Bügels ausreicht, um den Bügel in seinem ausgeklappten Zustand zu halten. Darüber hinaus, in der Ausführungsform mit zwei Streben des Anschlusselements, sind die Längen der jeweiligen Komponenten so gewählt, dass zusätzlich die Federwirkung zur Erreichung des Zusammenhaltens der beiden Streben des Anschlusselements ausreicht.

Erstreckt sich das blattförmige Widerlager in einer Ausführungsform des Brillengestells von den Gelenkelementen des Anschlusselements in Richtung zu dem Bügel, ist es dabei so ausgestaltet, dass die äußeren Blattfedern beim Einklappen der Bügel über das Widerlager hinweg laufen können.

Um eine zusätzliche Stabilität zu erreichen, kann gemäß der Erfindung zusätzlich eine Manschette vorgesehen werden, die vor dem Anbringen des Bügels über das zu dem Bügel gehörende Anschlusselement aufschiebbar ist und so die Streben miteinander biegesteif fixiert.

Sämtliche Bestandteile des erfindungsgemäßen Brillengestells können in einer bevorzugten Ausführungsform als Stanzteile oder Schnittteile aus Blech hergestellt werden, die noch anschließend in die gewünschte abschließende Form gebogen werden. Denkbar ist auch die Verwendung von Titan als Material der einzelnen Elemente.

Die Erfindung soll nun anhand der in den beiliegenden Zeichnungen dargestellten Ausführungsbeispiele näher beschrieben werden. Es zeigen:
- Fig. 1: eine perspektivische Ansicht eines Bügels für ein Brillengestell nach dem Stand der Technik;
- Fig. 2a: eine perspektivische Ansicht eines ungeformten Bügels für ein Brillengestell gemäß der Erfindung mit daran angeformten Ösen;
- Fig. 2b: eine perspektivische Ansicht des geformten Bügels für ein Brillengestell gemäß der Erfindung mit gebogenen Ösen;
- Fig. 3: eine perspektivische Explosionsdarstellung einer Hälfte eines Brillengestells gemäß der Erfindung;
- Fig. 4a: eine schematische Ansicht eines Bügels und einer Fassung des erfindungsgemäßen Brillengestells im ausgeklappten Zustand des Bügels;
- Fig. 4b: eine schematische Ansicht des Bügels und der Fassung des erfindungsgemäßen Brillengestells im eingeklappten Zustand des Bügels; und
- Fig. 5: ein Anschlusselement mit alternativen Gelenkelementen.

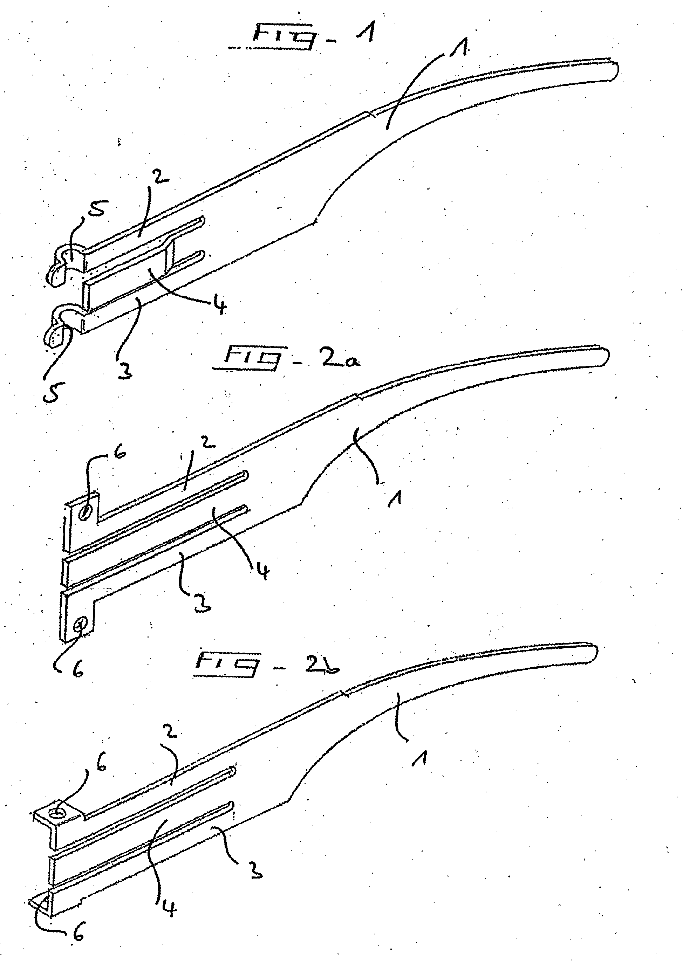

In Fig. 1 ist exemplarisch ein Bügel 1 aus dem Stand der Technik gezeigt, wie er aus der EP 0 863 424 B1 bekannt ist. Der Bügel 1 teilt sich in drei Blattfedern 2, 3 und 4 auf, in zwei äußere Blattfedern 2 und 3 und in eine mittlere Blattfeder 4. Die äußeren Blattfedern 2 und 3 weisen an ihren Enden Biegungen 5 auf, welche in entsprechende, hier nicht näher dargestellte Ausnehmungen eines Anschlusselements einer Fassung eingreifen. Wie vorhergehend erwähnt, liegen dabei die mittlere Blattfeder 4 und die äußeren Blattfedern 2 und 3 auf einander gegenüberliegenden Seiten des Anschlusselements des Brillengestells, was einer einfachen Montage des Bügels entgegensteht.

Die Fig. 2a und 2b zeigen schematisch einen Bügel 1 für ein Brillengestell gemäß der Erfindung.

Der Bügel 1 weist ebenfalls zwei äußere Blattfedern 2 und 3 sowie eine mittlere Blattfeder 4 auf. Die äußeren Blattfedern 2 und 3 tragen an ihren Enden jeweils eine Öse 6.

Fig. 2a zeigt hierbei die Form des Bügels 1 als Stanzblechteil, während in der Fig. 2b die Ösen 6 quer zur Längsrichtung des Bügels 1 gebogen sind, um die Achse eines Drehgelenks zu definieren.

Der in der Fig. 2b dargestellte Brillenbügel weist gegenüber dem in der Fig. 1 gezeigten Brillenbügel verlängerte Schlitze zur Teilung der Blattfedern auf, um das Auseinanderziehen der beiden äußeren Blattfedern quer zur Längsrichtung des Bügels zu erleichtern, was unten näher erläutert wird.

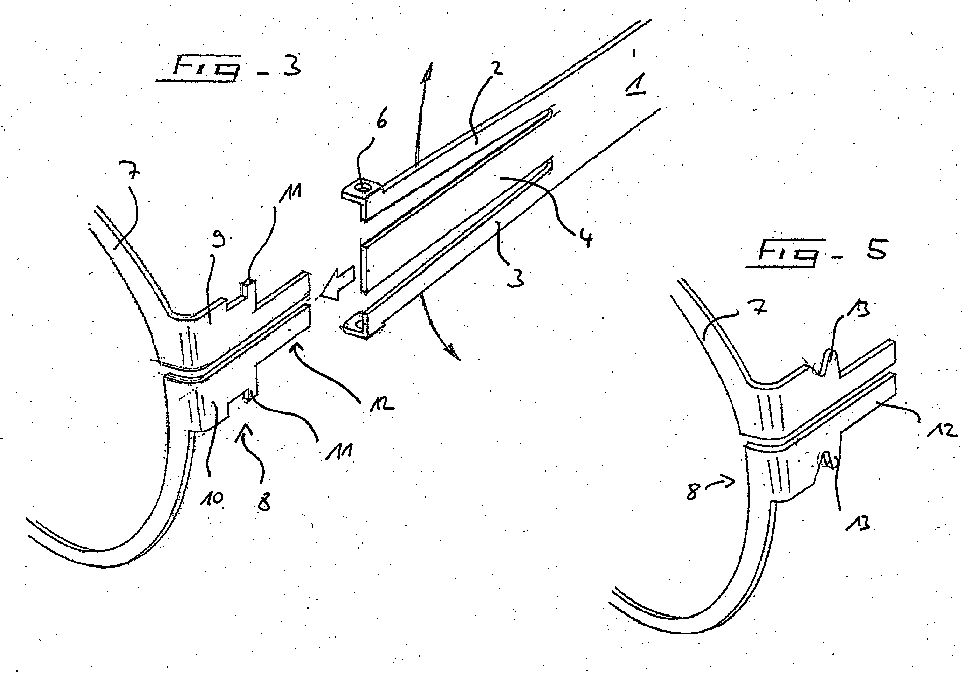

In Fig. 3 ist der Bügel 1 getrennt von einer Fassung 7 gezeigt.

Die Fassung 7 weist zu beiden Seiten ein Anschlusselement 8 auf, das im Vergleich zur Länge des Bügels relativ kurz ist, sich in Richtung zu dem Bügel 1 erstreckt und in eine obere Strebe 9 und in eine untere Strebe 10 aufgeteilt ist.

Wie in der Fig. 3 zu erkennen ist, erstreckt sich die Teilung des Anschlusselements in den vorderen Teil der Fassung 7 bis zu den hier nicht dargestellten Brillengläsern. Ist der Bügel 1 abgenommen, lässt sich die Fassung 7 seitlich leicht öffnen, indem die Streben 9 und 10 auseinander gebogen werden, um die Brillengläser einzusetzen bzw. auszuwechseln.

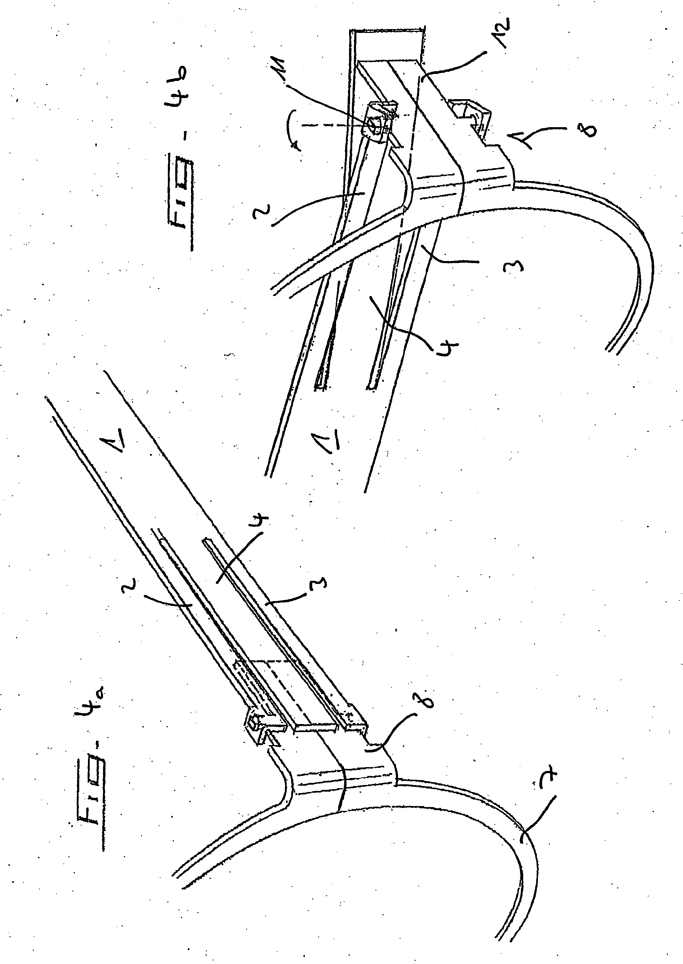

An den Streben 9 und 10 des Anschlusselements 8 sind übereinander liegend unter Ausbildung einer Drehachse Drehzapfen 11 angeordnet, welche in die Ösen 6 der äußeren Blattfedern 2 und 3 des Bügels 1 im montierten Zustand, wie in den Fig. 4a Fig. 4b gezeigt, eingreifen und so ein einfaches Drehgelenk ausbilden.

Wie aus Fig. 3 ersichtlich, wird der Bügel 1 auf einfache Weise an dem Anschlusselement 8 dadurch befestigt, dass die äußeren Blattfedern 2 und 3 auseinander gezogen werden und über die Drehzapfen 11 geschoben werden. Die Federwirkung der äußeren Blattfedern 2 und 3 aufeinander zu bewirkt, dass die Ösen 6 verliersicher, aber dennoch drehbar über den Drehzapfen 11 einschnappen, wodurch zusätzlich die obere Strebe 9 und die untere Strebe 10 biegesteif miteinander fixiert werden.

Das Anschlusselement 8 weist ein blattförmiges Widerlager 12 auf, welches sich von den Drehzapfen 11 in Richtung zu dem Bügel 1 erstreckt.

Wie in Fig. 4a zu erkennen ist, kommt die mittlere Blattfeder 4 im ausgeklappten Zustand an der dem Brillenträger abgewandten Fläche des Widerlagers 12 zum Anliegen. Beim Einklappen, wie dies die Fig. 4b zeigt, stützt sich die mittlere Blattfeder 4 an dem Widerlager 12 ab, um einen Rückfedermechanismus auszubilden. Das Widerlager 12 ist dabei so geformt, dass die äußeren Blattfedern 2 und 3 ungehindert über das Widerlager 12 beim Einklappen des Bügels 1 laufen können.

In Fig. 5 ist noch schematisch eine alternative Ausführungsform des Anschlusselements 8 gezeigt. Diese weist kegelartige Drehzapfen 13 auf, welche in hier nicht näher dargestellten Lagerschalen der äußeren Blattfedern drehbar aufgenommen werden können.

## Patentansprüche

1. Brillengestell mit links und rechts je einem Bügel (1) und mit einer Fassung (7), die links und rechts je ein Anschlusselement (8) aufweist, dessen bügelseitiges Ende in Richtung des Bügels (1) im ausgeklappten Zustand weist, wobei an dem Anschlusselement (8) Gelenkelemente (11;13) angeordnet sind und der Bügel (1) an seinem fassungsseitigen Ende drei Finger (2; 3; 4) aufweist, von denen die beiden äußeren (2,3) an ihrem Ende jeweils ein Gelenkelement (6) aufweisen, welches mit einem Gelenkelement (11;13) des Anschlusselements (8) unter Ausbildung eines Drehgelenks zusammenwirkt, wobei der mittlere Finger (4) so ausgebildet ist, dass er sich an dem Anschlusselement (8) abstützt, **dadurch gekennzeichnet, dass** die äußeren Finger (2,3) und die Gelenkelemente (11; 13) des Anschlusselements (8) so ausgebildet sind, dass in Richtung der Gelenkachse des Drehgelenks eine Federwirkung ausgeübt wird, die eine verliersichere Verbindung zwischen dem Bügel (1) und dem jeweiligen Anschlusselement (8) sicherstellt,
und das Anschlusselement (8) durchgehend in eine obere und untere Strebe (9;10) geteilt ist, wobei sich die Teilung des Anschlusselements (8) durch die Fassung (7) hindurch bis zu den von der Fassung (7) aufgenommenen Brillengläsern erstreckt, und das Brillengestell darüber hinaus so ausgebildet ist, dass die Federwirkung ausreicht, um die beiden Streben (9;10) gegeneinander zu verspannen, so dass die Brillengläser in den entsprechenden Abschnitten der Fassung (7) verliersicher fixiert werden.

2. Brillengestell nach Anspruch 1, bei welchem die Gelenkelemente der Bügel (1) aus an den äußeren Blattfedern (2; 3) des Bügels (1) angeordneten Ösen (6) oder Lagerschalen bestehen und die Gelenkelemente des Anschlusselements (8) aus Zapfen (11; 13) bestehen, die in die Ösen (6) oder Lagerschalen unter Ausbildung der Gelenkachse eingreifen.

3. Brillengestell nach Anspruch 1 oder 2, bei welchem das Anschlusselement (8) ein Widerlager (12) aufweist, an dem sich die mittlere Blattfeder (4) des Bügels (1) abstützt, wobei die Länge der Blattfedern (2;3;4) des Bügels (1) und die Länge des Widerlagers (12) so gewählt sind, dass die Federwirkung zur Erreichung des Zusammenhaltens der beiden Streben (9;10) des Anschlusselements (8) ausreicht und eine zweite Federwirkung, die quer zu der ersten Federwirkung gerichtet ist, ausreicht, um den Bügel (1) in seinem ausgeklappten Zustand zu halten.

4. Brillengestell nach einem der vorhergehenden Ansprüche, bei welchem die Fassung (7) mit dem Anschlusselement (8) und den daran angeordneten Gelenkelementen (11;13) sowie der Bügel (1) mit den drei Blattfedern (2;3;4) und den an den äußeren Blattfedern (2;3) angeordneten Gelenkelementen (6) aus Blech hergestellt sind.

## Claims

1. Glasses frame comprising a temple (1) on the left side and on the right side, respectively, and a rim (7) including a connecting element (8) on the left side and on the right side, respectively, the temple-side end of which connecting element pointing in a direction of the temple (1) in a folded-up state, wherein the temple (1) comprises three fingers (2; 3; 4) on its rim-side end, of which the outer fingers (2; 3) comprise on their ends a joint element (6), respectively, which cooperates with a joint element (11; 13) of the connecting element (8) to form a swivel joint, wherein the central finger (4) is configured such that it is supported against the connecting element (8), **characterized in that** the outer fingers (2; 3) and the joint elements (11; 13) of the connecting element (8) are configured in such a way that a spring resilience is acting in direction of the joint axis of the swivel joint, which is sufficient for holding the temple (1) and the respective connecting element (8) together, and wherein the connecting element (8) is divided in an upper bar and a lower bar (9; 10) over its entire length, wherein the division of the connecting element (8) extends through the rim (7) to the lenses which are received by the rim (7), and wherein the glasses frame is designed such that the spring resilience is sufficient for tensioning the two bars (9; 10) against one another such that the lenses are fixed in the respective sections of the rim (7).

2. Glasses frame according to claim 1, in which the joint elements of the temple (1) are formed as loops (6) or bearing bushes arranged on the outer leaf springs (2; 3) of the temple (1) and in which the joint elements of the connecting element (8) are formed as pins (11; 13) which engage with the loops (6) or bearing bushes thereby forming a joint axis.

3. Glasses frame according to claim 1 or 2, in which the connecting element (8) comprises an abutment (12) on which the central leaf spring (4) of the temple (1) is supported, wherein the length of the leaf springs (2; 3; 4) of the temple (1) and the length of the abutment (12) are selected such that the spring resilience is sufficient for holding the two bars (9; 10) of the connecting element (8) together and a second spring resilience which is directed perpendicular to the first resilience, is sufficient for holding the temple (1) in the folded-up state.

4. Glasses frame according to one of the preceding claims, in which the rim (7) with the connecting element (8) and the joint elements (11; 13) arranged thereto as well as the temple (1) with the three leaf springs (2; 3; 4) and the joint elements (6) arranged on the outer leaf springs (2; 3) are made of sheet metal.

## Revendications

1. Armature de lunettes comprenant une branche respective (1), à gauche et à droite, et une monture (7) munie, à gauche et à droite, d'un élément respectif de rattachement (8) dont l'extrémité, située côté branche, pointe en direction de ladite branche (1) à l'état déployé par pivotement, sachant que des éléments d'articulation (11 ; 13) sont disposés sur ledit élément de rattachement (8) et que la branche (1) présente, à son extrémité située côté monture, trois lamelles (2 ; 3 ; 4) parmi lesquelles les deux lamelles extérieures (2, 3) offrent, à leur extrémité, un élément respectif d'articulation (6) qui coopère avec un élément d'articulation (11 ; 13) de l'élément de rattachement (8), en formant une articulation tournante, la lamelle centrale (4) étant réalisée de manière à prendre appui contre ledit élément de rattachement (8), **caractérisée par le fait que** les lamelles extérieures (2, 3), et les éléments d'articulation (11 ; 13) de l'élément de rattachement (8), sont conçus de telle sorte qu'il s'exerce, dans la direction de l'axe de l'articulation tournante, un effet d'élasticité assurant une liaison imperdable entre la branche (1) et l'élément de rattachement (8) considéré ; et ledit élément de rattachement (8) est scindé, de bout en bout, en des membrures (9; 10) supérieure et inférieure, la subdivision dudit élément de rattachement (8) parcourant l'intégralité de la monture (7), jusqu'aux verres enchâssés dans ladite monture (7), l'armature de lunettes étant, de surcroît, réalisée de façon telle que l'effet d'élasticité soit suffisant pour bloquer les deux membrures (9 ; 10) l'une contre l'autre, si bien que les verres de lunettes sont verrouillés à demeure, de manière imperdable, dans les régions correspondantes de ladite monture (7).

2. Armature de lunettes selon la revendication 1, dans laquelle les éléments d'articulation des branches (1) sont constitués par des oeillets (6) ou des écuelles de pivot, implanté(e)s sur les lames de ressort extérieures (2 ; 3) de la branche (1), et les éléments d'articulation de l'élément de rattachement (8) sont constitués par des tenons (11; 13) pénétrant dans lesdits oeillets (6) ou dans lesdites écuelles de pivot, en formant l'axe d'articulation.

3. Armature de lunettes selon la revendication 1 ou 2, dans laquelle l'élément de rattachement (8) comporte une contre-butée (12) sur laquelle la lame de ressort centrale (4) de la branche (1) est en appui, la longueur des lames de ressort (2 ; 3 ; 4) de ladite branche (1), et la longueur de ladite contre-butée (12), étant choisies de façon telle que l'effet d'élasticité soit suffisant pour procurer la cohésion des deux membrures (9 ; 10) dudit élément de rattachement (8) ; et qu'un second effet d'élasticité, dirigé transversalement par rapport au premier effet d'élasticité, soit suffisant pour maintenir ladite branche (1) dans son état déployé par pivotement.

4. Armature de lunettes selon l'une des revendications précédentes, dans laquelle la monture (7) associée à l'élément de rattachement (8) et aux éléments d'articulation (11 ; 13) situés sur ce dernier, de même que la branche (1) associée aux trois lames de ressort (2 ; 3 ; 4) et aux éléments d'articulation (6) disposés sur les lames de ressort extérieures (2 ; 3), sont fabriquées en tôle.
